# EUROPÄISCHE PATENTSCHRIFT

(11) **EP 3 786 038 B1**
(45) Veröffentlichungstag und Bekanntmachung des Hinweises auf die Patenterteilung: **26.06.2024**
(21) Anmeldenummer: 20192340.6
(22) Anmeldetag: 24.08.2020
(51) Int. Cl.: B62J 1/06, B62J 1/08, B62K 19/36

(54) **FAHRRAD-SATTELSTÜTZE**
BICYCLE SADDLE TUBE
TIGE DE SELLE DE BICYCLETTE

(30) Priorität: 28.08.2019 DE 202019104713 U
(43) Veröffentlichungstag der Anmeldung: 03.03.2021
(73) Patentinhaber: Canyon Bicycles GmbH, 56073 Koblenz (DE)
(72) Erfinder: Schuchnigg, Lukas, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 3 321 154
- WO-A1-2004/007269
- DE-U1-202007 014 551
- US-A1- 2011 248 469
- US-A1- 2013 228 668

## Beschreibung

Die Erfindung betrifft eine Fahrrad-Sattelstütze, insbesondere für Rennräder, wobei unter Rennrädern auch spezielle Ausführungsformen wie Triathlon-Fahrräder, Zeitfahrräder und dergleichen zu verstehen sind.

Herkömmliche Sattelstützen werden im Sitzrohr eines Fahrradrahmens durch eine Klemmschelle fixiert. Hierzu weist das Sitzrohr im oberen Endbereich einen Längsschlitz auf und ist von der Klemmschelle umgeben. Ferner ist es zur Fixierung der Fahrrad-Sattelstütze im Sitzrohr bekannt anstelle einer Sattelschelle innerhalb des Sitzrohrs ein keilartiges Element vorzusehen, das mithilfe einer Klemmschraube gegen die Sattelstütze gedrückt wird. Hierdurch erfolgt ein klemmendes fixieren der Sattelstütze im Sitzrohr.

Insbesondere bei Rennrädern besteht die grundsätzliche Anforderung an die Fahrrad-Sattelstütze, dass einerseits ein möglichst großer Komfort und andererseits gute aerodynamische Eigenschaften erzielt werden sollen. Diese Anforderungen stehen in einem gewissen Widerspruch zueinander, da eine gute Dämpfungseigenschaft beispielsweise durch eine Sattelstütze mit einem flachen Querprofil, beispielsweise einem querovalen Profil erzielt werden kann, eine derartige Sattelstütze jedoch aerodynamisch ungünstig ist.

Aus der gattungsgemäßen EP 3,321,154 ist eine Fahrrad-Sattelstütze bekannt. Diese weist ein erstes Bauteil auf, dass ein Verbindungsteil zum Verbinden mit einem Fahrradsattel umfasst. Dieses Bauteil erstreckt sich in montiertem Zustand in Richtung des Sitzrohrs des Fahrradrahmens. Ein weiteres Bauteil ist über ein Halteteil im Sitzrohr des Fahrradrahmens fixierbar und erstreckt sich in Richtung des Verbindungsteils. Zwischen diesen beiden Bauteilen ist ein flächiges Dämpfungselement angeordnet.

Aufgabe der Erfindung ist es eine Fahrrad-Sattelstütze zu schaffen, die gute Dämpfungseigenschaften bei guten aerodynamischen Eigenschaften aufweist.

Die Lösung der Aufgabe erfolgt durch eine Fahrrad-Sattelstütze mit den Merkmalen des Anspruchs 1.

Die erfindungsgemäße Fahrrad-Sattelstütze, die insbesondere für Rennräder geeignet ist, weist ein Stützelement auf. Das Stützelement weist ein in montiertem Zustand am oberen Ende vorgesehenes Verbindungsteil auf. Das Verbindungsteil dient zum Verbinden des Stützelements mit einem Fahrradsattel, wobei die Verbindung üblicherweise über ein Sattelgestell erfolgt. Ferner weist das Stützelement ein Halteteil auf. Das Halteteil ragt in montiertem Zustand vorzugsweise vollständig in das Sitzrohr und ist somit in montiertem Zustand, insbesondere im unteren Ende des Stützelements angeordnet. Das Halteteil dient zum Fixieren des Stützelements im Sitzrohr eines Fahrradrahmens, wobei die Fixierung durch ein zusätzliches Klemmelement erfolgen kann. Des Weiteren weist das Stützelement ein Biegeteil auf. Das Biegeteil ist zwischen dem Verbindungsteil und dem Halteteil angeordnet, wobei das Biegeteil insbesondere flexibel ausgestaltet ist. Ferner weist die erfindungsgemäße Fahrrad-Sattelstütze ein mit dem Stützelement verbundenes Dämpfungselement auf. Durch das Dämpfungselement werden auftretende Stöße oder dergleichen gedämpft, sodass diese zumindest nicht vollständig an den Fahrer übertragen werden. Des Weiteren ist das Dämpfungselement zumindest teilweise von einem Formelement umschlossen. Durch das Formelement ist gewährleistet, dass bei einer Verformung des Dämpfungselements dieses nicht oder nur teilweise durch eine Formänderung ausweichen kann. Hierdurch erfolgt ein Vernichten von Energie, wodurch eine Dämpfung erzielt werden kann.

In besonders bevorzugter Ausführungsform ist das Dämpfungselement mit dem Biegeteil, insbesondere an einer Vorderseite des Biegeteils verbunden. Die Vorderseite des Biegeteils ist hierbei diejenige in montiertem Zustand in Fahrtrichtung weisende Seite des Biegeteils. Besonders bevorzugt ist es hierbei, dass das Dämpfungselement vollflächig mit dem Biegeteil verbunden ist. Des Weiteren ist es bevorzugt, dass sich das Dämpfungselement mindestens über 50%, insbesondere mindestens über 70% und besonders bevorzugt mindestens über 90% des Biegeteils erstreckt. In besonders bevorzugter Ausführungsform erstreckt sich das Dämpfungselement somit über einen wesentlichen Teil der Länge des Biegeteils. Gegebenenfalls kann das Dämpfungselement auch in den Bereich des Verbindungsteils und/oder des Halteteils ragen.

Des Weiteren ist es bevorzugt, dass die Breite des Dämpfungselements mindestens 80% und insbesondere mindestens 90% der Breite des Biegeteils quer zur Fahrtrichtung aufweist.

Durch die vorstehend beschriebene, insbesondere bevorzugte besondere Ausgestaltung des Dämpfungselements, in Verbindung mit dem Biegeelement, können gute Dämpfungseigenschaften erzielt werden. Bei einer elastischen Verformung des Biegeelements wird das Dämpfungselement mit verformt. Durch die zumindest teilweise Ummantelung des Dämpfungselements durch das Formelement kann das Dämpfungselement nicht ausweichen, sondern wird insbesondere komprimiert. Hierdurch erfolgt eine Dämpfung.

In besonders bevorzugter Weiterbildung der Erfindung weist das Dämpfungselement einen weichen Kunststoff, insbesondere Polyurethan auf und ist besonders bevorzugt aus diesem hergestellt. Insbesondere weist das Material des Dämpfungselements eine Shorehärte von 30A bis 85A auf.

Das Formelement ist erfindungsgemäß schalenförmig ausgebildet, um das Dämpfungselement zumindest an seinen freien Außenseiten, vorzugsweise großflächig zu umgeben. Bevorzugt ist es hierbei, dass das Dämpfungselement mit dem Formelement an einer Innenseite des Formelements verbunden ist. Insbesondere liegt das Dämpfungselement vollflächig an der Innenseite des Formelements an. Besonders bevorzugt ist es, dass auch die Verbindung zwischen dem Dämpfungselement und dem Formelement flächig, beispielsweise durch verkleben, erfolgt.

Das Formelement ist im Querschnitt U-förmig ausgebildet, sodass das Formelement insbesondere in montiertem Zustand die beiden Seitenflächen sowie die Vorderseite des Dämpfungselements umgibt. Hierdurch ist beim Verformen des Dämpfungselements im Wesentlichen ein Ausweichen des Dämpfungselements vermieden. Insbesondere durch die U-förmige Ausgestaltung kann eine Vorderseite mit sehr guten aerodynamischen Eigenschaften realisiert werden.

Bei einer besonders bevorzugten Weiterbildung der Erfindung ist zwischen dem Formelement und dem Biegeteil ein Abstand, insbesondere ein Spalt ausgebildet. Vorzugsweise ist das Formelement unabhängig vom Vorsehen eines Spalts ausschließlich über das Dämpfungselement mit dem dem Stützelement, insbesondere dem Biegeteil verbunden. Es besteht vorzugsweise keine unmittelbare Verbindung zwischen Formelement und dem Sützelement, insbesondere dem Biegeteil. Insofern erfolgt auch hier keine unmittelbare Kraftübertragung, sodass sämtliche Kräfte und Momente über das Dämpfungselement übertragen werden und insofern gute Dämpfungseigenschaften realisiert werden können.

In einer weiteren bevorzugten Ausführungsform ist das Formelement derart ausgebildet, dass es in Biegerichtung, d.h. insbesondere in Fahrtrichtung elastischer als quer zur Biegerichtung ausgebildet ist. Bevorzugt ist insofern ein struktureller Aufbau, bei dem das Stützelement quer zur Fahrtrichtung, bzw. Rahmenlängsrichtung breiter ausgebildet ist als in Rahmenlängsrichtung. Vorzugsweise ist das Biegeteil und insbesondere das gesamte Stützelement als Hohlprofil ausgebildet.

In besonders bevorzugter Ausführungsform ist das Biegeteil und das Halteteil zueinander versetzt. Vorzugsweise ist das Biegeteil und das Halteteil zueinander parallel versetzt. In montiertem Zustand ist das Halteteil in Fahrtrichtung, vorzugsweise vor dem Biegeteil angeordnet. Besonders bevorzugt ist es, dass das Stützelement in Seitenansicht einen im wesentlichen S-förmig ausgestaltet ist.

Nachfolgend wird die Erfindung anhand einer bevorzugten Ausführungsform unter Bezugnahme auf die anliegenden Zeichnungen näher erläutert.

Es zeigen:
- Figur 1: eine schematische Seitenansicht einer montierten Fahrrad-Sattelstütze, wobei zur Verdeutlichung das Sattelrohr geschnitten dargestellt ist
- Figur 2: eine schematische perspektivische Explosionszeichnung der Fahrrad-Sattelstütze und
- Figur 3: eine schematische Schnittansicht durch das Sattelrohr entlang der Linie III-III in Figur 1.

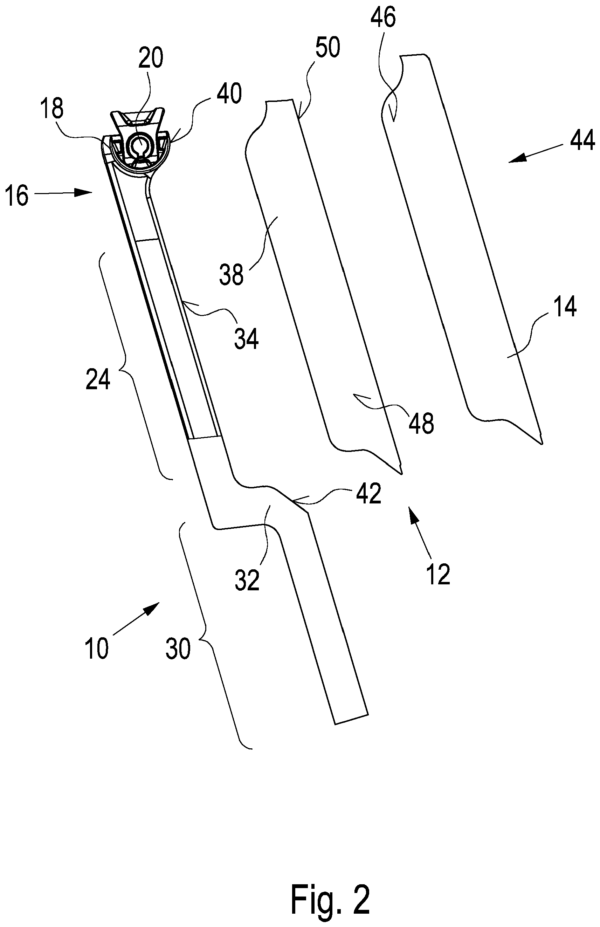

Die Fahrrad-Sattelstütze weist im Wesentlichen drei Bauteile (Figur 2) auf. Ein S-förmig ausgebildetes Stützelement 10, ein Dämpfungselement 12 und ein Formelement 14.

Das Stützelement weist an seinem in montiertem Zustand oberen Ende 16 einen Verbindungteil 18 auf. Dieser weist im dargestellten Ausführungsbeispiel eine kreisringförmige Öffnung 20 auf, in der ein Halteelement 22 zur Verbindung mit einem Fahrradsattel vorgesehen ist. Die Verbindung zu dem Fahrradsattel kann hierbei mittelbar über ein Sattelgestell erfolgen.

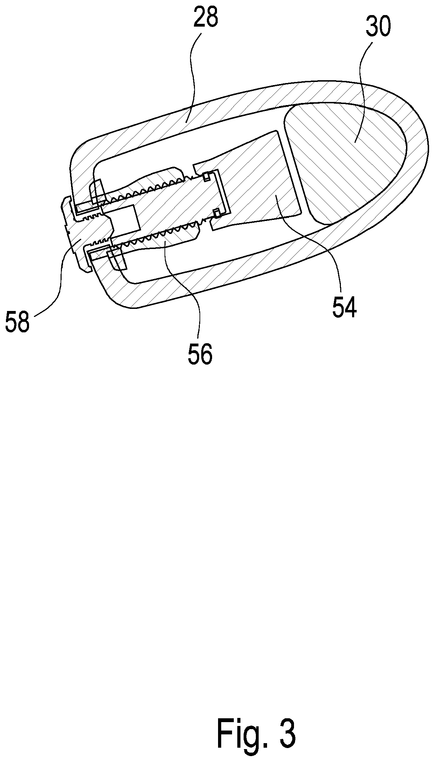

An das Verbindungsteil 10 grenzt das Biegeteil 24 an. Dieses ist stabförmig ausgebildet und erstreckt sich in montiertem Zustand im Wesentlichen in Längsrichtung 26 eines Sattelrohrs 28. An das Biegeteil 24 schließt das Halteteil 30 an. Das Halteteil 30 ist in montiertem Zustand innerhalb des Sitzrohrs 28 (Figur 2) angeordnet. Aufgrund des Versatzes zwischen dem Biegeteil 28 und dem Halteteil 30, der insbesondere parallel ist, ist im dargestellten Ausführungsbeispiel ein Zwischenteil 32 vorgesehen, wobei das Zwischenteil 32 auch Teil des Biegeteils 24 sein kann. Das Halteteil 30 verläuft im Wesentlichen in Längsrichtung 26 des Sattelrohrs 28 in montiertem Zustand. Die Fixierung des Halteteils 30 in dem Sattelrohr 28 erfolgt durch eine Klemmung (Figur 3).

An einer Vorderseite 34 des Biegeteils 24, d.h. an derjenigen Seite des Biegeteils 24, die in montiertem Zustand in Fahrtrichtung 36 weist, ist das Dämpfungselement 12 angeordnet. Hierzu ist eine in Richtung der Vorderseite 34 weisende Rückseite 38 des Dämpfungselements 12, insbesondere vollflächig mit der Vorderseite 34, insbesondere durch verkleben, verbunden. Die Formgestaltung des Dämpfungselements 12 ist im dargestellten Ausführungsbeispiel derart, dass diese in einem oberen Bereich ebenfalls an einer Außenseite 40 des Verbindungselements 16 und einer Außenseite 42 des Zwischenteils 32 anliegt und auch in diesem Bereich vorzugsweise vollflächig verbunden, insbesondere verklebt ist.

Das Formelement 14 weist einen hohlen Querschnitt auf und ist im Querschnitt U-förmig ausgestaltet. Das Formelement 14 kann somit in Figur 3 in Richtung eines Pfeils 44 über das Dämpfungselement 12 gesteckt werden. Vorzugsweise ist die gesamte U-förmige Innenseite 46 des Formelements 14 mit den einander gegenüberliegenden Außenseiten 48 und der Vorderseite 50 des Dämpfungselements 12 verbunden.

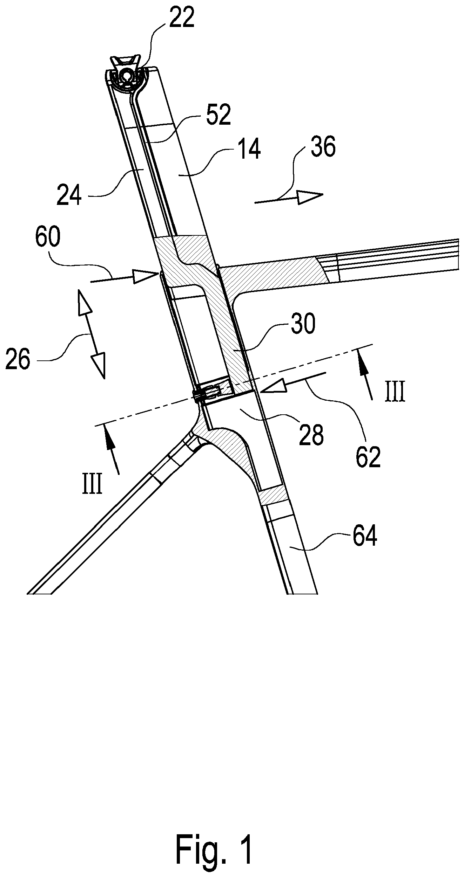

In montiertem Zustand (Figur 1 und 2) ist zwischen dem Formelement 14 und dem Biegeteil 24 ein Spalt 52 vorgesehen. Der Spalt 52 erstreckt sich auf beiden Seiten über die gesamte Länge des Formelements 14. Hierdurch ist sichergestellt, dass auch beim Verformen des Biegeteils 24 das Formelement 14 nicht mit dem Biegeteil 24 in Kontakt kommt, sodass die Kraft- und Momentenübertragung stets nur über das Dämpfungselement 12 erfolgt. Die Verformung des Dämpfungselements 12 wird durch das schalenförmige Formelement unterdrückt, sodass das Dämpfungselement komprimiert oder gestreckt wird. Hierdurch erfolgt ein Vernichten von Energie und somit ein dämpfen.

Die erfindungsgemäße Fahrrad-Sattelstütze ist derart ausgestaltet, dass das Stützelement 10 mit dem Dämpfungselement 12 und dem schalenförmigen Formelement 48 verbunden ist. In dieser Ausgestaltung kann die Fahrrad-Sattelstütze auf einfache Weise montiert werden, in dem sie von oben in das Sitzrohr 28 eingeführt und über die Klemmung fixiert wird.

Zur Fixierung der Fahrradsattelstütze ist eine Klemmung (Figur 3) vorgesehen. Innerhalb des Sattelrohrs 28 ist das Halteteil 30 angeordnet, dass den Querschnitt des Sattelrohrs 28 nicht ausfüllt. Zur Klemmung ist sodann innerhalb des Sattelrohrs 28 ein Klemmelement 54 angeordnet. Dieses drückt das Halteelement 30 gegen die Innenseite des Sattelrohrs 28. Hierzu ist in einer Gewindehülse 56 eine Schraube 58 vorgesehen.

Unabhängig von der vorstehend beschriebenen besonders bevorzugten Ausführungsform der Erfindung weist die in Seitenansicht S-förmige Ausgestaltung der Fahrradsattelstütze den Vorteil auf, dass zwei Kontakt- und Belastungsstellen am Rahmen auftreten. Eine obere Belastungsstelle ist am oberen Rahmenende 60 und eine untere Belastungsstelle am unteren Ende 62 der Sattelstütze. Im dargestellten Ausführungsbeispiel erfolgt in diesem Bereich auch die Klemmung. Ein weiterer Vorteil der in Seitenansicht S-förmigen Ausgestaltungen der Sattelstütze besteht darin, dass ein auf Höhe des Hinterrades angeordneten Bereich 64 des Sattelrohrs 28 im Bereich des Hinterrads in Fahrtrichtung 36 schmaler ausgestaltet sein kann. Hierdurch entsteht eine größere Reifenfreiheit. Des Weiteren besteht ein Vorteil der erfindungsgemäßen Ausgestaltung darin, dass die Klemmung (Figur 3) vollständig innerhalb des Sattelrohrs 28 angeordnet werden kann.

## Patentansprüche

1. Fahrrad-Sattelstütze, insbesondere für Rennräder, mit
einem Stützelement (10), das ein Verbindungsteil (16) zum Verbinden mit einem Fahrradsattel, ein Halteteil (30) zum Fixieren in einem Sitzrohr (28) eines Fahrradrahmens und ein zwischen dem Verbindungsteil (16) und dem Halteteil (30) angeordnetes Biegeteil (24) aufweist, und
einem mit dem Stützelement (10) verbundenen Dämpfungselement (12)
**gekennzeichnet, durch**
ein schalenförmig ausgebildetes, einen U-förmigen Querschnitt aufweisendes Formelement (14), welches
das Dämpfungselement (12) zumindest teilweise umschließt.

2. Fahrrad-Sattelstütze, insbesondere für Rennräder nach Anspruch 1, **dadurch gekennzeichnet, dass** das Dämpfungselement (12) mit dem Biegeteil (24), insbesondere an einer Vorderseite (34) des Biegeteils (24) verbunden ist.

3. Fahrrad-Sattelstütze, insbesondere für Rennräder nach einem der Ansprüche 1 oder 2, **dadurch gekennzeichnet, dass** das Dämpfungselement (12) vollflächig mit dem Biegeteil (24) verbunden ist.

4. Fahrrad-Sattelstütze, insbesondere für Rennräder nach einem der Ansprüche 1 bis 3, **dadurch gekennzeichnet, dass** das Dämpfungselement (12) sich über mindestens 50%, insbesondere mindestens 70% und besonders bevorzugt mindestens 90% des Biegeteils (12) erstreckt.

5. Fahrrad-Sattelstütze, insbesondere für Rennräder nach einem der Ansprüche 1 bis 4, **dadurch gekennzeichnet, dass** die Breite des Dämpfungselements (12) mindestens 80%, insbesondere mindestens 90% der Breite des Biegeteils (24) quer zur Fahrtrichtung (36) aufweist.

6. Fahrrad-Sattelstütze, insbesondere für Rennräder nach einem der Ansprüche 1 bis 5, **dadurch gekennzeichnet, dass** das Dämpfungselement (12) einen weichen Kunststoff, insbesondere Polyurethan ausweist und besonders bevorzugt aus diesem hergestellt ist.

7. Fahrrad-Sattelstütze, insbesondere für Rennräder nach einem der Ansprüche 1 bis 6, **dadurch gekennzeichnet, dass** das Dämpfungselement (12) an einer Innenseite (46) des Formelements (14), insbesondere flächig anliegt und besonders bevorzugt flächig mit diesem verbunden ist.

8. Fahrrad-Sattelstütze, insbesondere für Rennräder nach einem der Ansprüche 1 bis 7, **dadurch gekennzeichnet, dass** zwischen dem Formelement (14) und dem Biegeteil (24) ein Abstand (52), insbesondere ein Spalt ausgebildet ist.

9. Fahrrad-Sattelstütze, insbesondere für Rennräder nach einem der Ansprüche 1 bis 8, **dadurch gekennzeichnet, dass** das Formelement (14) ausschließlich über das Dämpfungselement (12) mit dem Biegeteil (24) verbunden ist.

10. Fahrrad-Sattelstütze, insbesondere für Rennräder nach einem der Ansprüche 1 bis 9, **dadurch gekennzeichnet, dass** das Formelement (14) derart ausgebildet ist, dass es in Biegerichtung (36) elastischer als quer zur Biegerichtung (36) ausgebildet ist.

11. Fahrrad-Sattelstütze, insbesondere für Rennräder nach einem der Ansprüche 1 bis 10, **dadurch gekennzeichnet, dass** das Biegeteil (24) und vorzugsweise das gesamte Stützelement (10) als Hohlprofil ausgebildet ist.

12. Fahrrad-Sattelstütze, insbesondere für Rennräder nach einem der Ansprüche 1 bis 11, **dadurch gekennzeichnet, dass** das Biegeteil (24) und das Halteteil (30) zueinander versetzt, insbesondere parallelversetzt sind.

13. Fahrrad-Sattelstütze, insbesondere für Rennräder nach einem der Ansprüche 1 bis 12, **dadurch gekennzeichnet, dass** das Stützelement (10) in Seitenansicht S-förmig ausgebildet ist.

## Claims

1. A bicycle seatpost, in particular for racing bicycles, comprising
a support element (10) having a connecting member (16) for connection to a bicycle saddle, a holding member (30) for fixing inside a seat tube (28) of a bicycle frame, and a bending member (24) arranged between the connecting member (16) and the holding member (30),
a damping element (12) connected to the support element (10),
**characterized by**
a shaped element (14) being shell-shaped and having a U-shaped cross-section, which at least partially encloses the damping element (12).

2. The bicycle seatpost, in particular for racing bicycles, according to claim 1, **characterized in that** the damping element (12) is connected to the bending member (24), in particular at a front side (34) of the bending member (24).

3. The bicycle seatpost, in particular for racing bicycles, according to any one of claims 1 or 2, **characterized in that** the damping element (12) is connected with its entire surface to the bending member (24).

4. The bicycle seatpost, in particular for racing bicycles, according to any one of claims 1 to 3, **characterized in that** the damping element (12) extends across at least 50%, particularly across at least 70% and particularly preferably across at least 90% of the bending member (12).

5. The bicycle seatpost, in particular for racing bicycles, according to any one of claims 1 to 4, **characterized in that** the width of the damping element (12) is at least 80%, particularly at least 90% of the width of the bending member (24) transversely to the direction of travel (36).

6. The bicycle seatpost, in particular for racing bicycles, according to any one of claims 1 to 5, **characterized in that** the damping element (12) has a soft plastic, in particular polyurethane and is particularly preferably made thereof.

7. The bicycle seatpost, in particular for racing bicycles, according to any one of claims 1 to 6, **characterized in that** the damping element (12) rests against an inside (46) of the shaped element (14), in particular in an areal manner, and is particularly preferably connected thereto in an areal manner.

8. The bicycle seatpost, in particular for racing bicycles, according to any one of claims 1 to 7, **characterized in that** a space (52), in particular a gap, is provided between the shaped element (14) and the bending member (24).

9. The bicycle seatpost, in particular for racing bicycles, according to any one of claims 1 to 8, **characterized in that** the shaped element (14) is connected exclusively through the damping element (12) to the bending member (24).

10. The bicycle seatpost, in particular for racing bicycles, according to any one of claims 1 to 9, **characterized in that** the shaped element (14) is configured such that it is more elastic in the bending direction (36) than transversely to the bending direction (36).

11. The bicycle seatpost, in particular for racing bicycles, according to any one of claims 1 to 10, **characterized in that** the bending member (24) and preferably the entire support element (10) is designed as a hollow profile.

12. The bicycle seatpost, in particular for racing bicycles, according to any one of claims 1 to 11, **characterized in that** the bending member (24) and the holding member (30) are offset to one another, in particular offset parallel to one another.

13. The bicycle seatpost, in particular for racing bicycles, according to any one of claims 1 to 12, **characterized in that** the support element (10) has a S-shaped design in side view.

## Revendications

1. Support de selle de bicyclette, en particulier pour bicyclettes de course, comportant un élément de support (10) qui présente une pièce de liaison (16) à relier à une selle de bicyclette, une pièce de retenue (30) à fixer dans un tube de selle (28) d'un cadre de bicyclette et une pièce de flexion (24) disposée entre la pièce de liaison (16) et la pièce de retenue (30), et
un élément d'amortissement (12) relié à l'élément de support (10),
**caractérisé par** un élément moulé (14) réalisé en forme de coque et présentant une section transversale en forme de U, qui entoure au moins partiellement l'élément d'amortissement (12).

2. Support de selle de bicyclette, en particulier pour bicyclettes de course, selon la revendication 1, **caractérisé en ce que** l'élément d'amortissement (12) est relié à la pièce de flexion (24), en particulier au niveau d'une face avant (34) de la pièce de flexion (24).

3. Support de selle de bicyclette, en particulier pour bicyclettes de course selon l'une quelconque des revendications 1 ou 2, **caractérisé en ce que** l'élément d'amortissement (12) est relié à la pièce de flexion (24) sur toute la surface.

4. Support de selle de bicyclette, en particulier pour bicyclettes de course, selon l'une des revendications 1 à 3, **caractérisé en ce que** l'élément d'amortissement (12) s'étend sur au moins 50 %, en particulier sur au moins 70 % et de manière particulièrement préférée sur au moins 90 % de la pièce de flexion (12).

5. Support de selle de bicyclette, en particulier pour bicyclettes de course, selon l'une des revendications 1 à 4, **caractérisé en ce que** la largeur de l'élément d'amortissement (12) présente au moins 80 %, en particulier au moins 90 % de la largeur de la pièce de flexion (24) transversalement à la direction de déplacement (36).

6. Support de selle de bicyclette, en particulier pour bicyclettes de course, selon l'une des revendications 1 à 5, **caractérisé en ce que** l'élément d'amortissement (12) présente une matière plastique souple, en particulier du polyuréthane, et est, de manière particulièrement préférée, fabriqué dans cette matière.

7. Support de selle de bicyclette, en particulier pour bicyclettes de course, selon l'une des revendications 1 à 6, **caractérisé en ce que** l'élément d'amortissement (12) repose sur un côté intérieur (46) de l'élément moulé (14), en particulier à plat, et est, de manière particulièrement préférée, relié à plat à celui-ci.

8. Support de selle de bicyclette, en particulier pour bicyclettes de course, selon l'une des revendications 1 à 7, **caractérisé en ce qu'**un espace (52), en particulier une fente, est formé entre l'élément moulé (14) et la pièce de flexion (24).

9. Support de selle de bicyclette, en particulier pour bicyclettes de course, selon l'une des revendications 1 à 8, **caractérisé en ce que** l'élément moulé (14) est relié à la pièce de flexion (24) exclusivement par l'intermédiaire de l'élément d'amortissement (12).

10. Support de selle de bicyclette, en particulier pour bicyclettes de course, selon l'une des revendications 1 à 9, **caractérisé en ce que** l'élément moulé (14) est conçu de manière à être plus élastique dans la direction de flexion (36) que transversalement à la direction de flexion (36).

11. Support de selle de bicyclette, en particulier pour bicyclettes de course selon l'une des revendications 1 à 10, **caractérisé en ce que** la pièce de flexion (24), et de préférence l'ensemble de l'élément de support (10), est réalisé sous la forme d'un profilé creux.

12. Support de selle de bicyclette, en particulier pour bicyclettes de course, selon l'une des revendications 1 à 11, **caractérisé en ce que** la pièce de flexion (24) et la pièce de maintien (30) sont décalées l'une par rapport à l'autre, en particulier décalées parallèlement.

13. Support de selle de bicyclette, en particulier pour bicyclettes de course, selon l'une des revendications 1 à 12, **caractérisé en ce que** l'élément de support (10) est réalisé en forme de S en vue latérale.
